# EUROPEAN PATENT APPLICATION

(11) **EP 1 172 137 A2**
(43) Date of publication of application: **16.01.2002**
(21) Application number: 01305818.5
(22) Date of filing: 05.07.2001
(51) Int. Cl.: B01J 3/04, B01J 19/00

(54) **Laboratory scale reaction systems**

(30) Priority: 12.07.2000 US 217876 P; 25.06.2001 US 887474
(71) Applicant: ROHM AND HAAS COMPANY, Philadelphia, Pennsylvania 19106-2399 (US)
(72) Inventor: Decourcy, Michael Stanley, Houston, Texas 77062 (US); Quintanilla, Aaron Angel, Houston, Texas 77018 (US); Myers, Ronald Eugene, Houston, Texas 77062 (US); Williams, David Alec, Houston, Texas 77043 (US)
(74) Representative: Buckley, Guy Julian

(57) **Abstract**

A lab-scale reactor unit comprises a body of thermal insulating material, a reaction chamber formed within the body of thermal insulating material, a pressure containment vessel disposed about the body of thermal insulating material, the pressure containment vessel having an inlet communicating with the reaction chamber, the pressure containment vessel having an outlet communicating with the reaction chamber and a quench cooler operatively connected to the outlet of the pressure containment vessel.

## Description

Catalytic reaction systems are used in various industries for a number of different purposes. Such systems often require very large capital investments for their construction, maintenance and operation. Accordingly, prior to initiating construction, it is important to know the system's optimal design, optimal operating conditions and potential safety concerns, as well as the optimal catalyst that should be employed.

One means of identifying such parameters is by employing the aid of a pilot plant reactor. The term "pilot plant reactor" typically refers to a reactor which is only slightly smaller than a comparable reactor used in a commercial plant. Another means of identifying such parameters is by employing the aid of a lab-scale reactor. The term "lab-scale reactor" typically refers to a reactor which is significantly smaller than a comparable reactor used in a commercial plant. Typically, a lab-scale reactor is designed for use within a laboratory setting.

On the one hand, the use of pilot plant reactors is desirable since, due to their relative size, they typically have a greater ability to identify the probable performance of a comparable reactor used in a commercial plant. However, also due to their size, pilot plant reactors are typically costly and difficult to alter.

On the other hand, the use of lab-scale reactors is equally desirable since, due to their relative size, they are typically much less expensive and easier to alter. However, also due to their size, such lab-scale reactors typically have a lesser ability to identify the probable performance of a comparable reactor used in a commercial plant. Moreover, since lab-scale reactors are often employed within a laboratory setting, their use can also raise safety concerns, especially when the reactions run therein employ reactants and/or products that are combustible and/or toxic.

For example, conventional lab-scale catalytic reaction studies are sometimes performed using a ½ inch to ¾ inch (internal diameter) single tube reactor made of quartz-glass or stainless steel and containing catalyst screens or ceramic foam-supported catalysts. Such conventional systems have the benefit of being relatively inexpensive and simple to operate. In such conventional systems, mixed raw material feeds are typically delivered to one end of the tube and passed through the catalyst to generate reaction products. Thereafter, a portion of the reaction products exiting the tube are sampled/analyzed while the remainder of the products are disposed. Typical examples of such conventional lab-scale reactors are disclosed in "HCN Synthesis by Ammoxidation of Methane and Ethane on Platinum Monoliths", S. S. Bharadwaj and L. D. Schmidt, Ind. Eng. Chem. Res. 1996, 35, 1524-1533 (18mm I.D. quartz tube) and "Effect Of Pressure On Three Catalytic Partial Oxidation Reactions At Millisecond Contact Times", A. G. Dietz III and L. D. Schmidt, Catalysis Letters, 33 (1995), 15-29 (18" long, ½" I.D. stainless steel tube).

One problem with these types of lab-scale reactors is that they typically do not have a means for rapidly quenching the reactor effluent as do their industrial-scale counterparts. Quench cooling to a pre-determined temperature is known in industry to be necessary to prevent decomposition of temperature-sensitive components in the reactor effluent. Instead of quench cooling, these types of lab-scale reactors typically rely on the heat loss of the tube section downstream of the catalyst to lower the product temperature. Without a controlled means of quench cooling, these single-tube type lab-scale reactors cannot consistently provide the same effluent compositions as those seen in their industrial-scale counterparts.

Even when these laboratory reaction systems are uninsulated, and therefore have large heat losses to the environment, the reduction in effluent gas temperature is less rapid than with intentional quench cooling and the effluent temperature is difficult to control, making these laboratory systems less representative of the industrial process than is desirable, especially under conditions of variable flow/operating rates (i.e. the temperature of the effluent will go up if rates are raised). Further, this approach is effective only with very small total system flow rates (e.g., about 5 standard liters per minute which is equal to about 1 lb./hr. reactant flow), wherein the system losses are large compared to the energy output from the heat of reaction. In order to study the effect of shorter residence times of reactants in the catalyst (which is of great importance as manufacturers strive to increase production rates in their existing equipment), total mass flow rate cannot be increased or the degree of quenching will suffer. The only way to study this effect with such reactors would be to reduce the catalyst cross-section, which, given that the catalyst is already of ¾" to ½" diameter, would be impractical.

Another problem with these single-tube laboratory reaction systems is that they are not designed to minimize the potential for flashbacks and detonations, which are potential hazards associated with using flammable reactants and/or products. Additionally, they are not designed to contain flashbacks or detonations, if they should occur. If uncontained, flashbacks and detonations can result in damage to equipment and potential injury to those operating the equipment. The risk of such hazards is especially high when experimentation involves the use of oxygen-enriched air (>21% O₂) as a reactant.

Another high temperature catalytic reaction system is disclosed in "Optimization of Yield through Feed Composition: HCN Process", B. Y. K. Pan and R. G. Roth, Ind. Eng. Chem. Process Des. Dev. 1968, 7(1), 53. This is a large pilot plant scale unit with an internal diameter (I. D.) of 4" and a throughput of between 95 and 105 lbs/hr of reactants, i.e. about 10 lbs/hr HCN production. This reactor system was designed for studies of air-based HCN reactions and has the limitation that it does not employ safety features that can minimize the potential for flashbacks and detonations. Additionally, it is not specifically designed to contain a flashback and/or a detonation should one occur in the system, making it undesirable for use in experimentation where oxygen-enriched air is used as a reactant. While this system does have a quench cooling capability, it utilizes a reactor design of limited flexibility, due, in part, to its use of a 4" diameter catalyst screen.

Given the aforementioned limitations of conventional lab-scale and pilot plant scale reactors, the manufacturing industry would greatly welcome a safer, more flexible lab-scale reactor which is especially useful for running high-temperature catalyzed reactions. It would be even further welcomed if such a reactor could provide results that correspond closely to its industrial-scale counterpart.

Accordingly, one object of the present invention is to provide a lab-scale reactor which accurately simulates the performance of its industrial-scale counterpart for catalyzed reactions.

Another object of the present invention is to provide a lab-scale reactor which can be operated in a laboratory setting to use reactants and/or produce products that are combustible and/or toxic without creating a significant safety risk.

Yet another object of this invention is to provide a lab-scale reactor which is relatively compact in size, flexible in use, inexpensive to construct and easy to operate.

These and other objects of the present invention, as will become apparent upon reading the following description in view of the attached drawing figures, are achieved by the provision, in a first aspect of the present invention of a lab-scale reactor unit, comprising: (a) a body of thermal insulating material, (b) a reaction chamber formed within the body of thermal insulating material, (c) a pressure containment vessel disposed about the body of thermal insulating material, the pressure containment vessel having an inlet communicating with the reaction chamber, the pressure containment vessel having an outlet communicating with the reaction chamber, and (d) a quench cooler operatively connected to the outlet of the pressure containment vessel.

In a further aspect, the present invention provides a lab-scale reactor system comprising: (a) a body of thermal insulating material, (b) a reaction chamber formed within the body of thermal insulating material, (c) a pressure containment vessel disposed about the body of thermal insulating material, the pressure containment vessel having an inlet communicating with the reaction chamber, the pressure containment vessel having an outlet · communicating with the reaction chamber, (d) a quench cooler having an inlet and an outlet, the inlet of the quench cooler connected to the outlet of the pressure containment vessel, (e) an inlet line connected to the inlet of the pressure containment vessel, (f) an outlet line connected to the outlet of the quench cooler, (g) a pressure control valve disposed in the outlet line, (h) a first pressure relief device connected to the outlet line, intermediate the pressure control valve and the outlet of the quench cooler, or the inlet line, proximate the inlet of the pressure containment vessel, and (i) optionally, a second pressure relief device connected to the inlet line, proximate the inlet of the pressure containment vessel, or the outlet line, intermediate the pressure control valve and the outlet of the quench cooler, with the proviso that, when two pressure relief devices are present, one pressure relief device is connected to the outlet line and one pressure relief device is connected to the inlet line.

The foregoing and other features and aspects of the present invention will become apparent upon reading the following detailed description and upon reference to the drawing figures, in which:
Figure 1 is a schematic illustration of a lab-scale reactor system in accord with the present invention.
Fig. 2A is a top view of a pressure containment vessel/quench cooler assembly in accord with the present invention.
Fig. 2B is a partial sectional view, taken along line I-I of Fig. 2A, of a pressure containment vessel/quench cooler assembly in accord with the present invention.
Fig. 3 is a sectional view of a pressure containment vessel/quench cooler assembly wherein the pressure containment vessel contains a body of thermal insulation with a reaction chamber formed therein in accord with the present invention.
Fig. 4A is a detailed sectional view of the body of thermal insulation with a reaction chamber formed therein as illustrated in Fig. 3.
Fig. 4B is a detailed sectional view of another embodiment of the body of thermal insulation with a reaction chamber formed therein in accord with the present invention.
Fig. 4C is a detailed sectional view of yet another embodiment of the body of thermal insulation with a reaction chamber formed therein in accord with the present invention.
Fig. 4D is a detailed sectional view of a further embodiment of the body of thermal insulation with a reaction chamber formed therein in accord with the present invention.
Fig. 4E is a detailed sectional view of a still further embodiment of the body of thermal insulation with a reaction chamber formed therein in accord with the present invention.
Fig. 5A is a top view of an assembled pressure containment vessel/quench cooler interface in accord with the present invention.
Fig. 5B is a sectional view of an assembled pressure containment vessel/quench cooler interface taken along line II-II of Fig. 5A.
Fig. 6A is a top view of a top half of a pressure containment vessel/quench cooler interface in accord with the present invention.
Fig. 6B is a side view of a top half of a pressure containment vessel/quench cooler interface in accord with the present invention.
Fig. 6C is a bottom view of a top half of a pressure containment vessel/quench cooler interface in accord with the present invention.
Fig. 6D is a sectional view of a top half of a pressure containment vessel/quench cooler interface taken along line III-III of Fig. 6C.
Fig. 7A is a bottom view of a bottom half of a pressure containment vessel/quench cooler interface in accord with the present invention.
Fig. 7B is a side view of a bottom half of a pressure containment vessel/quench cooler interface in accord with the present invention.
Fig. 7C is a top view of a bottom half of a pressure containment vessel/quench cooler interface in accord with the present invention.
Fig. 7D is a sectional view of a bottom half of a pressure containment vessel/quench cooler interface taken along line IV-IV of Fig. 7C.
Fig. 8 is a top view of a bottom half of a pressure containment vessel/quench cooler interface in accord with another embodiment of the present invention.
Fig. 9 is a partial sectional view of a mini flare in accord with the present invention.
Fig. 10 is a top view of a mini flare in accord with the present invention.

Although the lab-scale reactors of this invention can be used for many different purposes, they are especially useful for running catalyzed reactions. These lab-scale reactors are even further useful for running catalyzed reactions wherein the products produced, and/or the reactants employed, are combustible and/or toxic.

Examples of reactions that can be run in the lab-scale reactors disclosed herein include, without limitation, oxidation reactions of hydrocarbons such as alkanes and/or alkenes. Further examples of catalyzed reactions that can be run therein include those designed to produce products such as: acetylene, (meth)acrylonitrile, HCN, NO, (meth)acrolein, (meth)acrylic acid, and the like.

As stated above, the lab-scale reactor unit of the present invention comprises a reaction chamber formed within a body of thermal insulating material. In use the reaction chamber may contain a catalyst. The catalyst may be of varied form, e.g., a catalyst gauze, a catalyst monolith, particulate catalyst, etc. Typically, the catalyst will be arranged as a bed or block of catalyst material through which the reactants may flow, and this bed or block of catalyst material may be from about ½ inch to 5 inches in diameter.

The lab-scale reactor unit of the present invention further comprises a pressure containment vessel. This vessel surrounds the reaction chamber and is designed such that it can contain an explosion/detonation of the reactants employed, and/or the products produced, therein.

The lab-scale reactor unit also comprises a body of thermal insulating material within which the reaction chamber is formed. This body of thermal insulating material prevents heat generated in the reaction chamber from raising the temperature of the pressure containment vessel walls so as to cause a loss of strength therein due to heating.

The lab-scale reactor unit of the present invention further comprises a quench cooler. This quench cooler is preferably designed to mimic the performance, i.e. the cooling rate, of a heat exchanger typically employed in the reactor's industrial-scale counterpart.

The lab-scale reactor unit of the present invention also provides an inlet in the pressure containment vessel communicating with the reaction chamber. Such an inlet is designed so that reactants passing therethrough do so with a high velocity. One method of achieving this is to design the inlet lines such that they have a relatively small diameter. Moreover, the flow path of the reactants from the inlet to the reaction chamber is preferably designed to contain a conical expansion therein. This may be achieved by conically expanding the inlet line or by shaping the reaction chamber to have a conical expansion where the inlet line enters the same.

The lab-scale reactor system of the present invention may also include a disposal means for disposing of the reactor effluent from the reaction chamber. Such a disposal means may include a pyrolysis furnace for pyrolytic destruction of the reactor effluents or, preferably, a flare for incineration of the reactor effluents. If employed, the flare is preferably constructed with separately fueled burner(s) so as to ensure uninterrupted and hence complete combustion of the reactor effluents. The line(s) supplying reactor effluent to the flare may be constructed with a small internal diameter so as to help protect against flashback.

The lab-scale reactor unit of the present invention may also comprise an ignitor. The ignitor provides one means of starting a reaction. Examples of ignitors include a high-temperature resistance element, a spark generator and the like. Typically, the ignitor is placed in the reaction chamber, although it may also be used to heat reactants prior to their introduction into the reaction chamber.

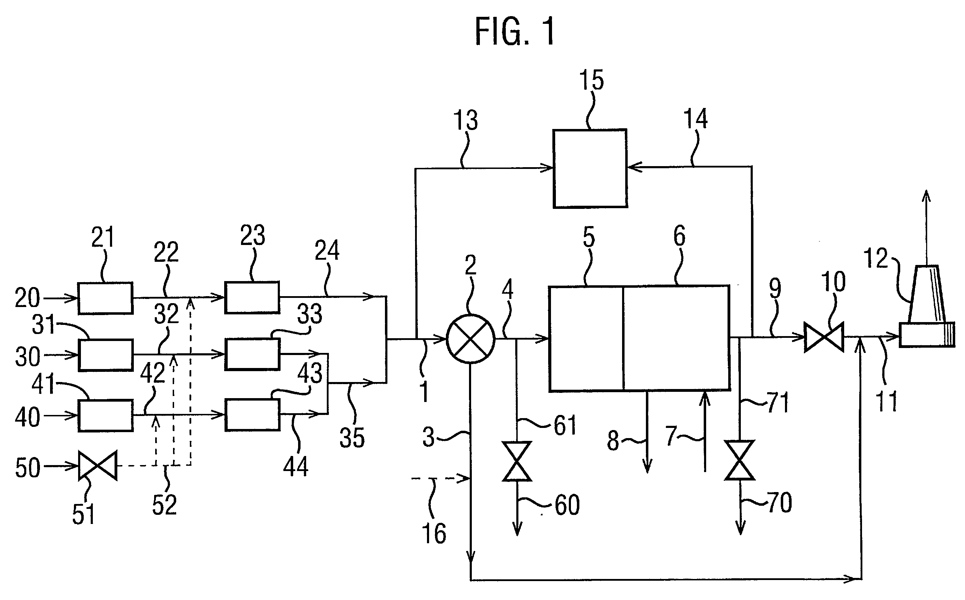

Fig. 1 illustrates an embodiment of the invention wherein hydrogen cyanide is produced by a high-temperature catalytic reaction using an oxygen-enriched feed (as compared to air). Because of the toxic properties of hydrogen cyanide, the entire lab-scale reactor system could be contained within a laboratory ventilation hood (not shown) as an added precaution against chemical release.

In particular, a feed gas comprising 60% by weight oxygen (e.g., oxygen-enriched air) is fed from a source (not shown) via line 20 to flow controller 21. A feed gas comprising methane is fed from a source (not shown) via line 30 to flow controller 31. A feed gas comprising ammonia is fed from a source (not shown) via line 40 to flow controller 41. Using their respective flow controllers, the flow rates of the three feeds are adjusted to achieve the desired feed ratios for the hydrogen cyanide formation reaction and the feeds pass through lines 22, 32 and 42, respectively, to their respective feed heaters 23, 33 and 43. Any heater which can be adjusted to achieve variable levels of heating can be used, e.g., suitable heaters include but are not limited to shell-and-tube heat exchangers, tube furnaces and electric resistance heaters.

The heated feed gas comprising methane passes through line 34 and is combined with the heated feed gas comprising ammonia passing through line 44, in line 35, to form a single stream. Line 35 may optionally contain a static mixing element (not shown) to improve the homogeneity of the mixture. The heated feed gas comprising 60% by weight oxygen passes through line 24 and is combined with the heated mixed gas comprising methane and ammonia passing through line 35, in line 1, to form a single stream. Line 1 may also optionally contain a static mixing element (not shown) to improve the homogeneity of the mixture.

A portion of the mixture comprising oxygen, methane and ammonia is drawn from line 1 through sample line 13 to analyzer 15 for compositional analysis. This compositional analysis allows verification that the desired feed ratios set via adjustments to flow controllers 21, 31 and 41 have been achieved. Analyzer 15 may be one or more analytical devices such as, but not limited to, gas chromatographs (GC), mass spectrometers, or GC-mass spectrometers.

The heated, mixed feed is then delivered to bypass valve 2. A three-way ball valve is preferred for bypass valve2 and it is installed such that flow from line 1 may either be directed to the reactor 5 via line 4 or to the bypass line 3. Bypass line 3 is utilized in nonsteady-state situations such as start-up and shut-down of the reactor and allows unreacted feed gases to pass to the flare 12 for safe disposal.

Under normal operating conditions, the heated, mixed feed gas is delivered to the reactor 5 where it is catalytically reacted at temperatures of between 1000°C and 1400°C to form a product gas comprising hydrogen cyanide. The product gas passes from reactor 5 into the quench cooler 6 where the product gas is rapidly cooled to a temperature of between 600°C and 100°C. The flow of cold cooling media entering the quench cooler 6 through line 7 is adjusted according to need, to absorb sufficient heat from the product stream, and exits the quench cooler 6 via line 8.

Cooled product gas leaves the quench cooler 6 via line 9 and a portion of the product gas is supplied to analyzer 15 via sample line 14. The remainder of the cooled product gas passes through back-pressure control valve 10. Back-pressure control valve is adjusted to maintain the desired operating pressure in reactor 5. The cooled product gas is then directed to flare 12 via line 11 for destruction. It is preferred that the flare 12 be supplied with a continuous source of fuel (not shown) to ensure that combustion is not interrupted. The effluent of the flare 12 may be vented with the laboratory ventilation hood (not shown) exhaust.

A sweep gas 16 is added to bypass line 3 to maintain a constant forward flow to the flare 12. This flow prevents accumulation of foulants in line 3 when there is no process flow in it and also minimizes the potential of flashback from the flare into line 11. Nitrogen is preferred as the sweep gas, but any gas that will not support combustion and is free from components that might condense in the system piping may be used as sweep gas.

An inert gas from a pressurized source of inert gas (not shown) may be fed to the system via line 50 to inert the system as a means for preventing flashback during start-up and shut-down of the system. In this embodiment, nitrogen is used as the inert gas, but other inert gases may also be utilized, if so desired. It is preferred that the inert gas supplied in line 50 be at a higher pressure than the feed gases supplied in lines 20, 30 and 40. When valve 51 is opened, inert gas is delivered to each of the feed gas lines 22, 32 and 42 via manifold 52, The inert gas then passes forward through the system, pushing the reaction system contents out of the system and into the flare 12. In start-up, this action ensures that the system is oxygen free prior to the introduction of fuels such as methane. In shut-down, this action helps to cool the feed heaters and reactor and also purges reactants from the system to rapidly stop the generation of product hydrogen cyanide. In both cases, the forward flow of inert gas helps to prevent flashback from the hot reactor 5 or the flare 12. In some embodiments, the operation of valve 51 may be remotely actuated and/or may also be combined with other actions such as shutting off flow through flow controllers 21, 31 and 41 and opening back-pressure control valve 10 to provide unimpeded flow from line 9 to the flare. Actuation of by pass valve 2 should not be incorporated into any such automated operations, however, as a sudden loss of flow to reactor 5 when it is in operation will lead to flashback and/or detonation in the reactor itself.

If a detonation does occur, the reactor 5 and the quench cooler 6 are of a sufficiently robust construction as to contain the detonation therein. However, pressure generated within the reactor 5 and/or quench cooler 6 may be expected in line 4 and line 9. In order to dissipate this pressure, one or both of these lines is fitted with a pressure relief device. In this regard, a pressure relief device 60 may be attached to line 4 via line 61 and/or a pressure relief device 70 may be attached to line 9 via line 71. Suitable pressure relief devices include safety valves, burstable diaphragms, etc., which can be set or obtained so as to open line 61 and 71 to the atmosphere upon attainment of a predetermined pressure therein. Preferably, lines 61 and 71 are as short as possible, so as to allow a dissipation of pressure out of the system as soon as possible after detonation and/or flashback.

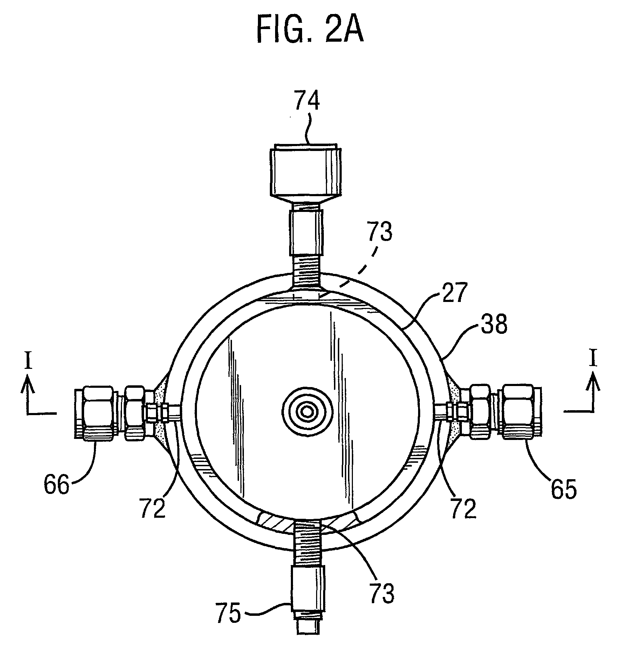

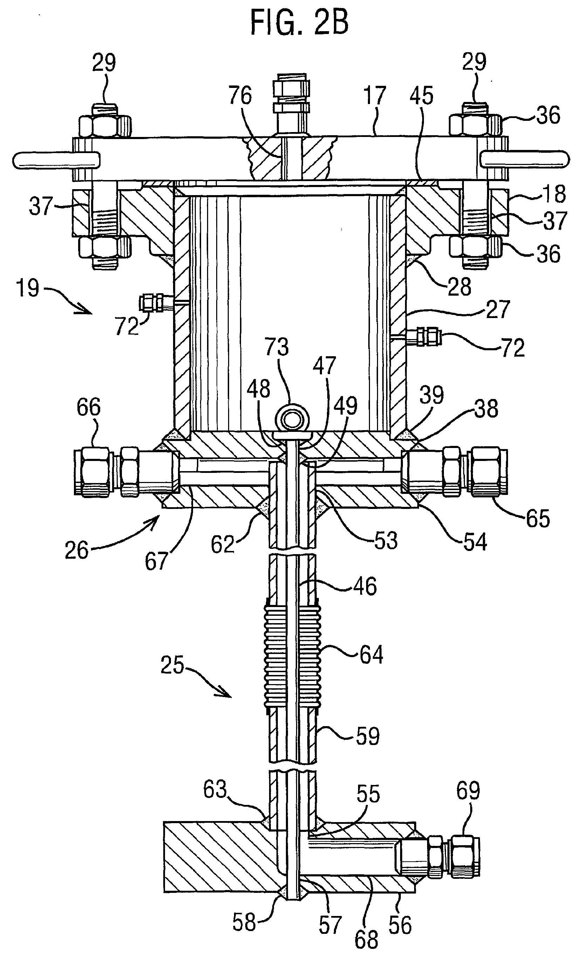

Figs. 2A and 2B illustrate an embodiment of a pressure containment vessel/quench cooler assembly in accord with the present invention. (Fig. 2A is a top view of the pressure containment vessel/quench cooler assembly with the cover plate 17 and flange 18 removed for clarity.) The pressure containment vessel/quench cooler assembly comprises a pressure containment section, generally indicated at 19, a cooler section, generally indicated at 25, and a pressure containment vessel/quench cooler interface 26 connecting the pressure containment section 19 and the cooler section 25.

The pressure containment section 19 comprises a cylindrical body section 27, having flange 18 connected thereto as by weld 28; a cover plate 17 which can be removably connected to the cylindrical body section by bolts 29, passing through the cover plate 17 and bores 37 in the flange 18, and nuts 36; and a top half 38 of the pressure containment vessel/ quench cooler interface 26 connected to the cylindrical body section 27 as by weld 39. A gasket 45 sandwiched between the cover plate 17 and flange 18 provides a pressure tight seal.

A bore 76 through cover plate 17 provides access to the interior of the pressure containment section 19.

The cylindrical body section 27 may be fitted with one or more wire ports 72 to allow thermocouple wires (not shown) to be inserted into the pressure containment vessel to monitor various temperatures therein.

The cylindrical body section 27 may also be fitted with one or more openings 73 whereby an analytical device such as a pyrometer or, as shown, a sight glass 74, may be mounted to view the interior of the cylindrical body section. If not in use, a threaded plug 75 or other such device may be inserted in the opening 73 to close the same.

The cooler section 25 comprises a reactor effluent pipe 46, which is fixed in a bore 47 through the top half 38 of the pressure containment vessel/quench cooler interface 26 by welds 48 and 49. The reactor effluent pipe passes through a bore 53 formed in the bottom half 54 of the pressure containment vessel/quench cooler interface 26, through a bore 55 formed in an upper part of a water outlet connection 56 and fixed in a bore 57 formed in a lower part of water outlet connection 56 by weld 58.

The cooler section 25 further comprises a water pipe 59 disposed coaxially about and spaced apart from reactor effluent pipe 46. The water pipe is fixed in bore 53 through the bottom half 54 of the pressure containment vessel/quench cooler interface 26 by weld 62. The water pipe is also fixed in bore 55 formed in the upper part of the water outlet connection 56 by weld 63. The water pipe is preferably fitted with a bellows section 64 to accommodate the thermal expansion/contraction of reactor effluent pipe 46.

In the operation of the cooler section, water is fed through connectors 65 and 66 into transverse bore 67 formed in the pressure containment vessel/quench cooler interface 26. The water flows into water pipe 59 which is in open communication with transverse bore 67, through the bore 55 formed in the upper part of water outlet connection 56 into a transverse bore 68 and then out through a connector 69.

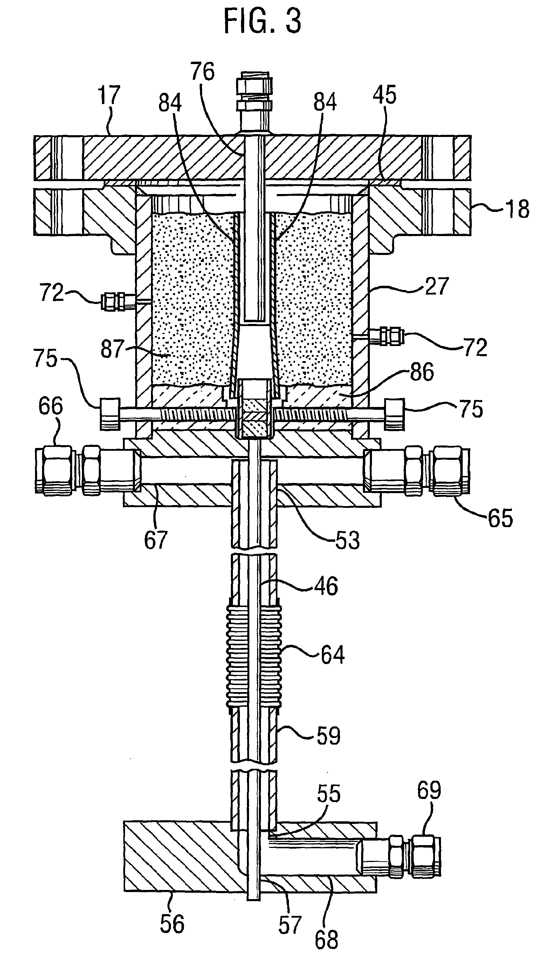

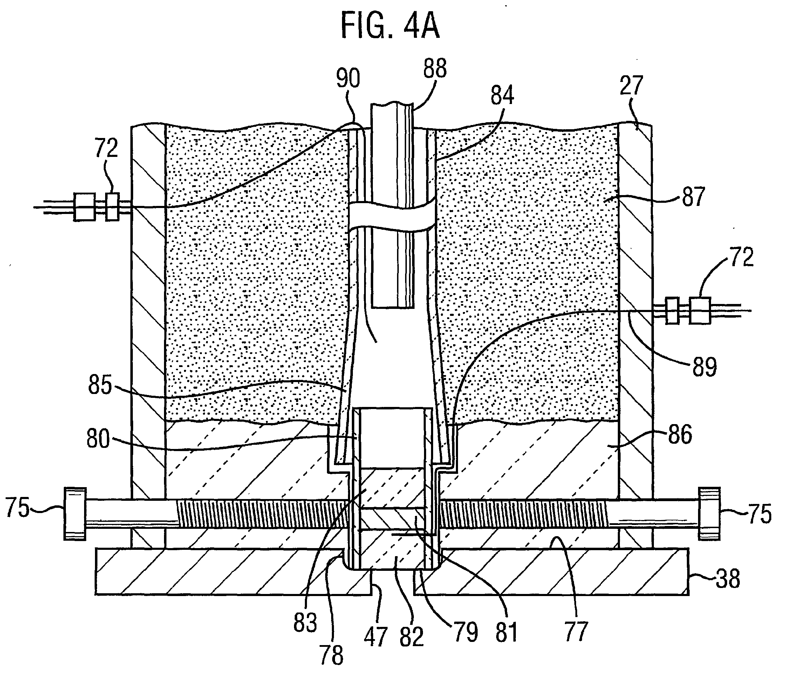

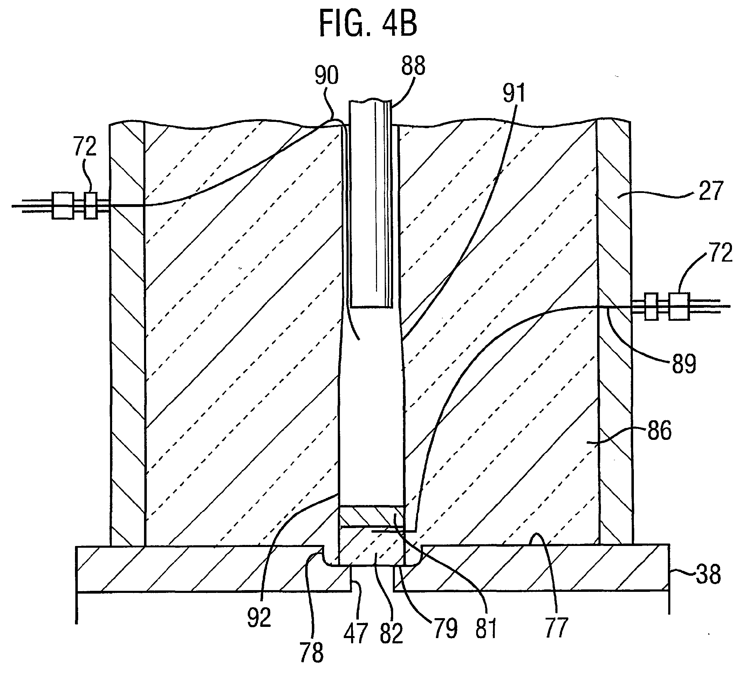

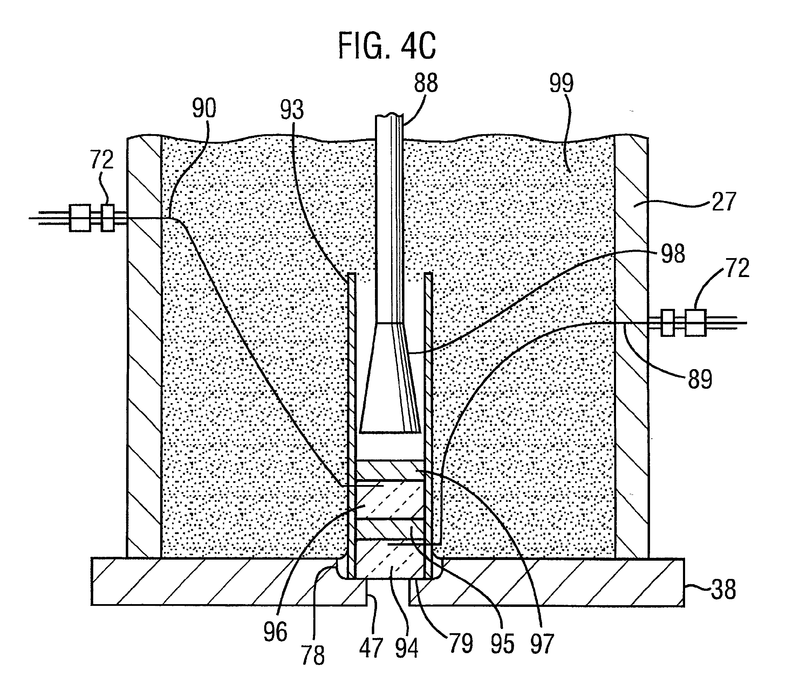

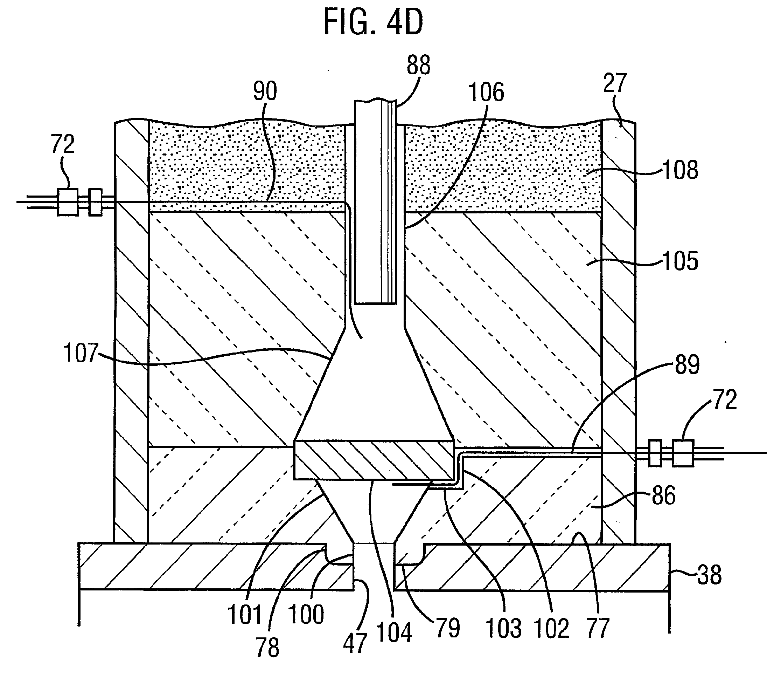

Fig. 3 is a sectional view of a pressure containment vessel/quench cooler assembly wherein the pressure containment vessel contains a body of thermal insulation with a reactor chamber formed therein as best seen in Fig. 4A.

In the embodiment of Fig. 4A, the face 77 of the top half of the pressure containment vessel/quench cooler interface facing the interior of the pressure containment vessel has a recess 78 formed therein which is coaxial with bore 47. The recess 78 forms a shoulder 79 that supports a tube 80 formed of a heat resistant material, such as quartz glass. The tube 80 contains a catalyst 81, e.g., a platinum/rhodium gauze or a quantity of particulate catalyst, supported on a first piece of porous ceramic foam 82 (e.g., a porous ceramic foam having 45 pores per inch) and sandwiched between the first piece of porous ceramic foam 82 and a second piece of porous ceramic foam piece 83 (e.g., a porous ceramic foam having 45 pores per inch), the two pieces of ceramic foam act as radiation heat shields during reaction. A tube 84 having a flared end, and formed of a heat resistant material, such as silicon nitride, extends over and about the top of tube 80. A heat resistant ceramic 86, such as a cast ceramic, e.g., Castolast-G (Harbison-Walker), surrounds the tube 80 and the flared end of the tube 84 to a level almost as high as the top of the tube 80. A layer of a loose fill heat resistant material 87, such as vermiculite, covers the heat resistant ceramic 86 and extends up to the top of tube 84. A reactant supply line 88 extends through the bore 76 in cover plate 17. Thermocouple 89 extends through one of the wire ports 72 so as to measure the gauze temperature. Thermocouple 90 extends through the other of the wire ports 72 so as to measure the head space temperature (i.e. the temperature in the flared portion 85 of tube 84 above the tube 80).

Fig. 4B is an alternative embodiment to that of Fig. 4A, wherein the pressure containment vessel's cylindrical body section 27 is filled with a heat resistant ceramic 86, such as a pre-cast ceramic, e.g., Pyrolite® (Rex Roto Corp.), however, the pre-cast ceramic has a conical expansion 91 formed in place and a cylindrical section 92 containing a catalyst 81, e.g., a catalyst gauze or a quantity of a particulate catalyst, supported on a piece of porous ceramic foam 82, which in turn is supported on shoulder 79 formed by recess 78.

Fig. 4C is a further alternative embodiment to that of Figs. 4A and 4B, wherein recess 78 forms a shoulder 79 that supports a support cylinder 93, which may be formed of metal ceramic or glass. Within support cylinder 93, the shoulder 79 also supports a first catalyst support 94, which may be a piece of ceramic foam; which in turn supports a first catalyst 95, which may be a catalyst gauze or a quantity of a particulate catalyst material; which in turn supports a second catalyst support 96, which may also be a piece of ceramic foam; which in turn supports a second catalyst 97, which may also be a catalyst gauze or a quantity of a particulate catalyst. A reactant supply line 88 extends into the support cylinder 93 and has a conically flared end piece 98 disposed within the support cylinder. The remainder of the cylindrical body section 27 is filled with a refractory fiber blanket 99 such as a silica/alumina refractory fiber blanket, e.g., Durablanket-S (Unifrax Corp.).

Fig. 4D is a yet further alternative embodiment to that of Figs. 4A, 4B and 4C, wherein a lower portion of cylindrical body section 27 is filled with a cast ceramic 86 (e.g., Castolast-G (Harbison-Walker)). The cast ceramic has a bore 100 formed therein whch is coaxial with bore 47 in the top half of the pressure containment vessel/quench cooler interface 38. Proceeding away from the interface 38, the bore 100 opens into a coaxial conical expansion 101 which in turn opens into a coaxial cylindrical expansion 102 forming a shoulder 103. The shoulder 103 supports a catalyst 104, e.g., a foam monolith catalyst or a catalyst gauze. A removable refractory block 105, e.g., a precast alumina block, is placed in the cylindrical body section 27 over the cast ceramic 86. The refractory block 105 has a bore 106 formed therein which is coaxial with bore 47. The bore 106 opens into a coaxial conical expansion 107 that aligns with the cylindrical expansion 102. A reactant supply line 88 extends into the bore 106. A layer 108 of thermal insulating material, e.g., a loose-fill insulating material or a ceramic fiber insulating material, covers the refractory block and fills the remainder of the cylindrical body section 27.

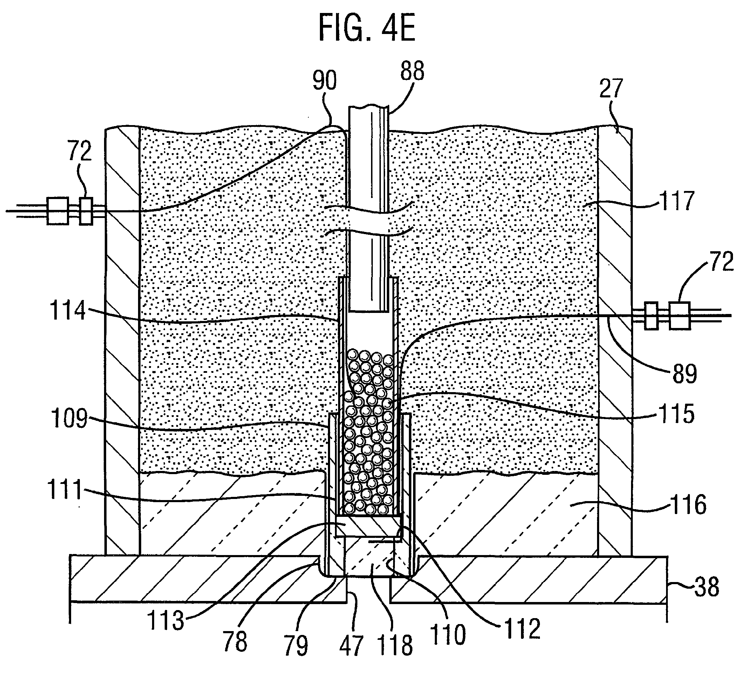

Fig. 4E is a still further alternative embodiment to that of Figs. 4A, 4B, 4C and 4D, wherein an outer tube 109, e.g., a quartz glass tube, is supported on shoulder 79 of recess 78. The outer tube 109 has a first interior portion 110 of a "smaller" internal diameter and a second interior portion 111 of a "larger" internal diameter ("smaller" and "larger" are merely used in a relative sense). The transition between these two interior portions produces a shoulder 112 upon which a catalyst 113, e.g., a catalyst gauze or a quantity of a particulate catalyst, may be supported. An inner tube 114, e.g., a quartz glass tube made of the same quartz glass as the outer tube 109, having an outer diameter substantially equal to the inner diameter of the second interior portion 111 of the outer tube 109 is disposed within the second interior portion 111 of the outer tube 109 so as to sandwich the catalyst 113 between itself and the shoulder 112. The inner tube may contain a quantity of quartz glass beads 115, which act as a flow distributor for reactants fed into the inner tube 114 from reactant supply line 88. At least a portion of the outer tube 109 is surrounded by a cast ceramic 116 and the remainder of cylindrical body section 27 is filled with an additional thermal insulator 117 such as a refractory fiber blanket. If desired a piece of porous ceramic foam 118 may be sandwiched between the catalyst 113 and the shoulder 79.

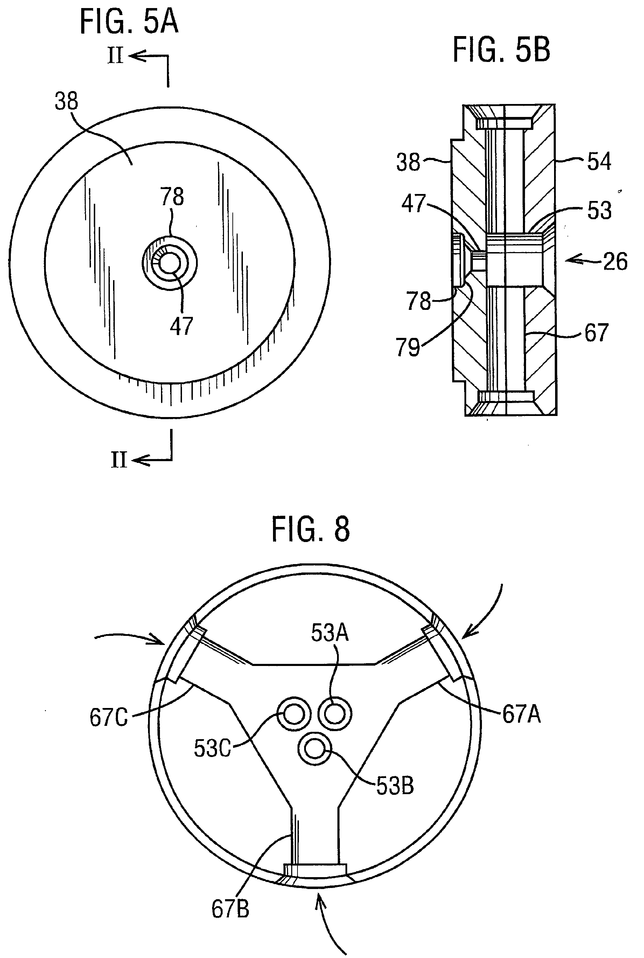

Figs. 5A and 5B illustrate an embodiment of a pressure containment vessel/quench cooler interface as used in Figs. 2A and 2B.

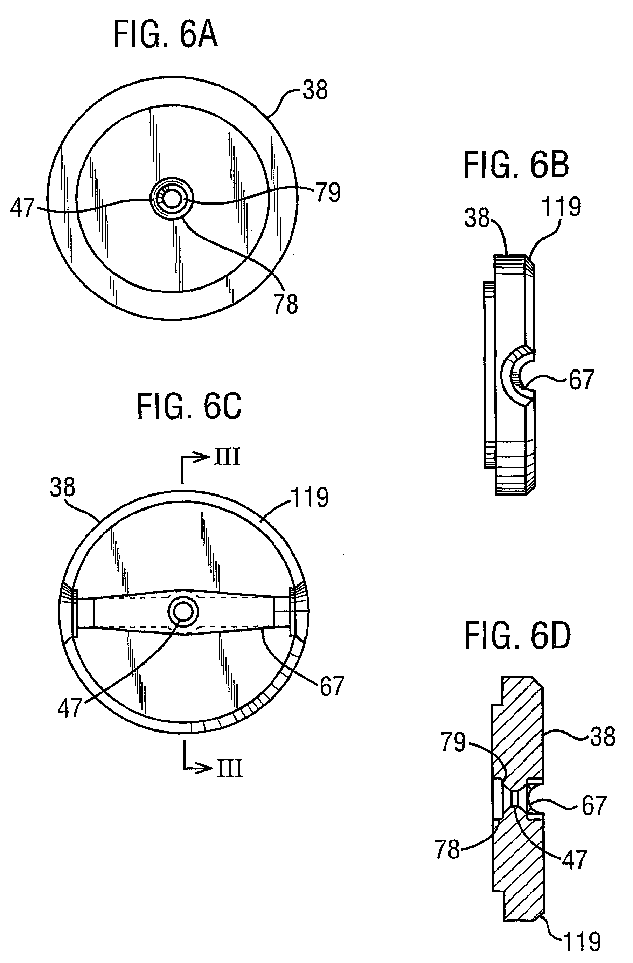

Figs. 6A, 6B, 6C and 6D illustrate an embodiment of a top half of a pressure containment vessel/quench cooler interface as shown in Figs. 5A and 5B wherein a champfer 119 is formed of the bottom exterior edge thereof to facilitate welding to the bottom half of the pressure containment vessel/quench cooler interface.

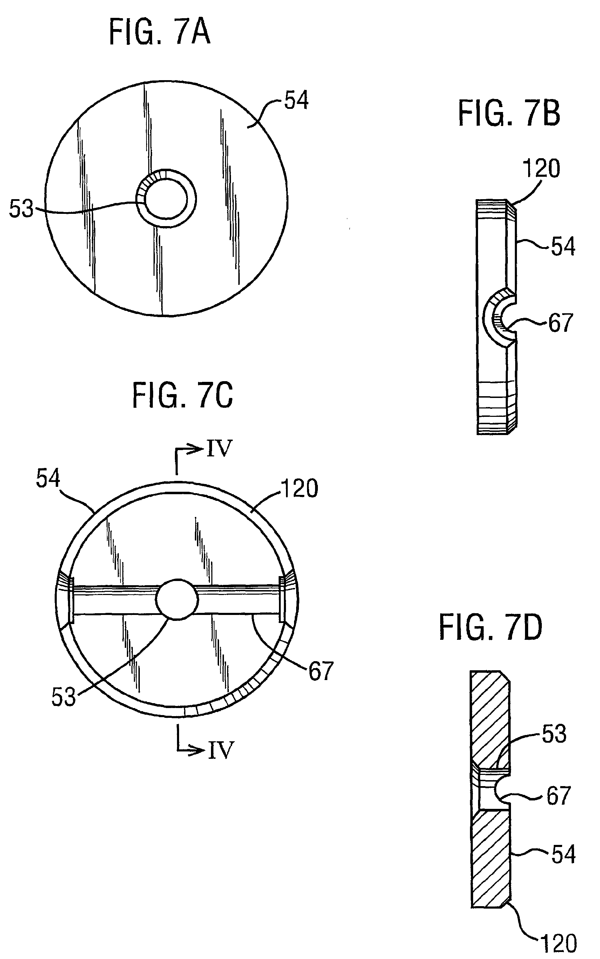

Figs. 7A, 7B, 7C and 7D illustrate an embodiment of a bottom half of a pressure containment vessel/quench cooler interface as shown in Figs. 5A and 5B wherein a champfer 120 is formed on the top exterior edge thereof to facilitate welding to the top half of the pressure containment vessel/quench cooler interface.

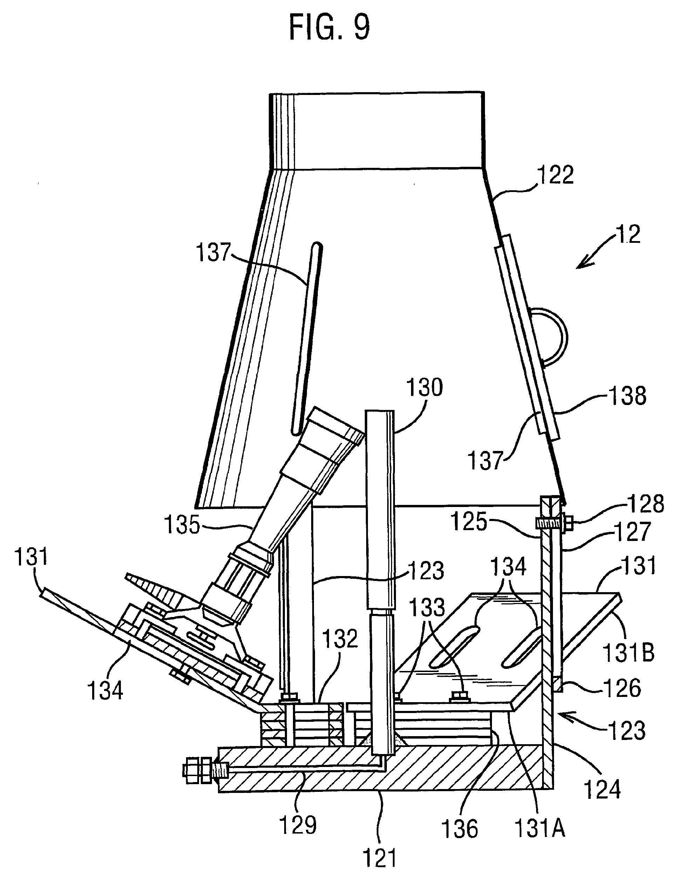

Fig. 8 illustrates an alternate embodiment of a bottom half of a pressure containment vessel/quench cooler interface. In this embodiment, three bores 53A, 53B and 53C are provided to receive three respective water pipes (not shown) therein. Each of these water pipes would, in turn, have a respective reactor effluent pipe passing therethrough. Three radial bores 67A, 67B and 67C are provided to supply water, as shown by the arrows, to the water pipes mounted in the bores 53A, 53B and 53C to cool the reactor effluent in the respective reactor effluent pipes. Such an arrangement, combined with a concommitant reconfiguration of the rest of the system would allow increased capacity, possibly to the level of a small-scale commercial unit.

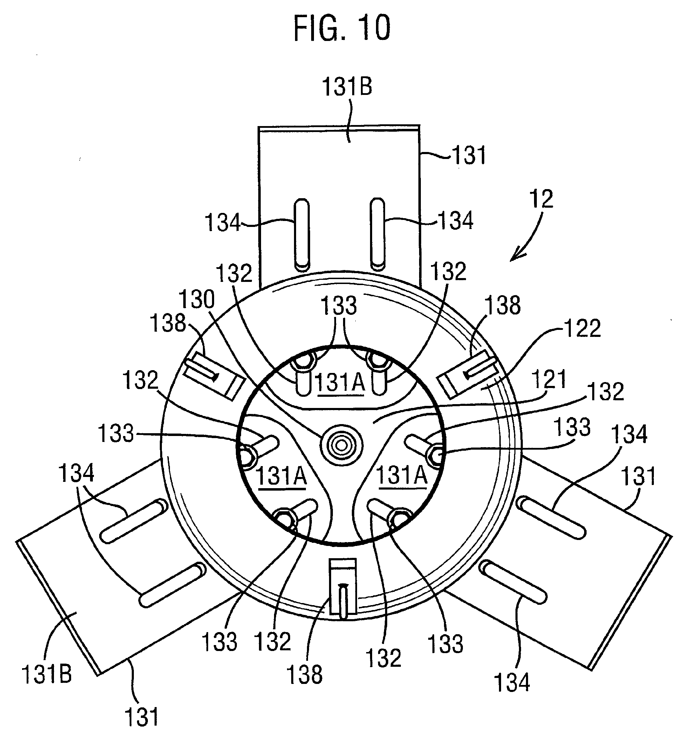

Figs 9 and 10 illustrate a mini flare 12 in accord with the present invention. The miniflare comprises a base 121 and a conical chimney section 122 which is supported above the base 121 by telescoping struts 123. Each telescoping strut comprises a lower section 124, attached to the base 121, which is provided with a threaded bore 125, and an upper section 126, attached to the chimney section 122, which is provided with an elongated slot 127. An adjusting screw 128 passes through the elongated slot 127 into the threaded bore 125, whereby tightening or loosening of the adjusting screw 128 prevents or allows relative movement between the lower section 124 and the upper section 126 to adjust the height of the chimney section 122 relative to the base 121. A bore 129 formed in the base 121 connects with a flare pipe 130 extending upward from the base into the center of the chimney section 122. One or more burner supports 131, in this embodiment three, are fixed to the base 121adjacent the flare pipe 130. Each burner support comprises a substantially horizontal section 131 A and a section 131B forming an obtuse angle with the section 131 A. A pair of slots 132 formed in horizontal section 131A and a corresponding pair of adjustment screws 133 which are threaded into the base 121 through slots 132 allow radial adjustment of the burner supports 131 relative to the flare pipe 130. An additional pair of slots 134 allow a burner135, e.g., a bunsen burner, to be adjustably mounted on section 131B of the burner support, as by nuts and bolts which pass through the burner base and the slots 134. The height of the burner supports 131 relative to the base 121 may be adjusted by interposing one or more plates 136 therebetween.

In use, reactor effluent is fed into bore 129 and thence through flare pipe 130 into the flame of the one or more burners 135, wherein the effluent is incinerated. Since the burners 135 may be separately supplied with fuel, uninterrupted combustion may be assured. Slits 137 may be formed in the chimney section 122 to allow visual inspection of the incineration operation. Each said slit being closed by a removable cover 138 when not opened for viewing.

In addition to being used as a means for optimizing the performance of an industrial-scale reactor, the lab-scale reactor of the present invention can also be used in small-scale industrial manufacturing processes where it is more convenient or where it is safer to manufacture a particular chemical on site than to transport that chemical to the site. In such instances, it would be desirable to feed the reactor effluent to a processing step, e.g., in the preparation of sodium cyanide, the reactor effluent would be contacted with NaOH, and then feed the remaining reactor effluent to the disposal device.

While the present description has centered on the use of a reaction chamber, it would be obvious to one of ordinary skill in the art that multiple reaction chambers could be provided, e.g., each reaction chamber containing a different catalyst or a catalyst of differing activity, and/or a series set or a parallel set of reactors could be provided, with each reactor chamber confined within its own pressure containment vessel.

While the present invention has been particularly shown and described with reference to the particular illustrative embodiments set forth above, it will be understood by those skilled in the art that various changes in form and details may be made without departing from the spirit and scope of the invention.

## Claims

1. A lab-scale reactor unit, comprising:
(a) a body of thermal insulating material,
(b) a reaction chamber formed within said body of thermal insulating material,
(c) a pressure containment vessel disposed about said body of thermal insulating material, said pressure containment vessel having an inlet communicating with said reaction chamber, said pressure containment vessel having an outlet communicating with said reaction chamber, and
(d) a quench cooler operatively connected to said outlet of said pressure containment vessel.

2. The lab-scale reactor unit according to claim 1, wherein said reaction chamber is formed by at least one hollow body of a heat-resistant material embedded in said body of thermal insulating material.

3. The lab-scale reactor unit according to claim 1, wherein said reaction chamber is formed as a void in said body of thermal insulating material.

4. The lab-scale reactor unit according to claim 1, wherein a flow path from said inlet to said reaction chamber undergoes a conical expansion.

5. The lab scale reactor unit according to claim 1, wherein at least one radiation heat shield is disposed within said reaction chamber.

6. A lab-scale reactor system comprising:
(a) a body of thermal insulating material,
(b) a reaction chamber formed within said body of thermal insulating material,
(c) a pressure containment vessel disposed about said body of thermal insulating material, said pressure containment vessel having an inlet communicating with said reaction chamber, said pressure containment vessel having an outlet communicating with said reaction chamber,
(d) a quench cooler having an inlet and an outlet, said inlet of said quench cooler connected to said outlet of said pressure containment vessel,
(e) an inlet line connected to said inlet of said pressure containment vessel,
(f) an outlet line connected to said outlet of said quench cooler,
(g) a pressure control valve disposed in said outlet line,
(h) a first pressure relief device connected to said outlet line, intermediate said pressure control valve and said outlet of said quench cooler, or said inlet line proximate said inlet of said pressure containment vessel, and
(i) optionally, a second pressure relief device connected to said inlet line, proximate said inlet of said pressure containment vessel, or said outlet line, intermediate said pressure control valve and said outlet of said quench cooler, with the proviso that, when two pressure relief devices are present, one pressure relief device is connected to said outlet line and one pressure relief device is connected to said inlet line.

7. The lab-scale reactor system according to claim 6, further comprising:
(j) an analysis means for determining the chemical composition of a stream fed thereto,
(k) a first sample line connecting said inlet line, at a point upstream of said second pressure relief device, and said analysis means, and
(l) a second sample line connecting said outlet line, at a point intermediate said first pressure relief device and said pressure control valve, and said analysis means.

8. The lab-scale reactor system according to claim 7, further comprising:
(m) at least one reactant feed line connecting a pressurized source of a reactant and said inlet line, each reactant feed line containing a flow controller, and
(n) an inert gas purge line connecting each reactant feed line, at a point intermediate said flow controller and said inlet line, with a pressurized source of an inert purge gas, said pressure of said pressurized source of inert purge gas being greater than said pressure of said pressurized source of a reactant, said inert gas purge line containing a valve.

9. The lab-scale reactor system according to claim 8, further comprising:
(o) a heater in each of said feed lines, said heater disposed intermediate said inert gas purge line and said inlet line.

10. The lab-scale reactor system according to claim 8, further comprising:
(p) a bypass line valve disposed in said inlet line, intermediate said second pressure relief device and said first sample line,
(q) a bypass line connecting said bypass valve and said outlet line, at a point downstream of said pressure control valve, and
(r) a sweep gas line connecting a pressurized source of sweep gas and said bypass line at a point proximate said bypass valve.

11. The lab-scale reactor system according to claim 10, further comprising:
(s) a disposal means, connected to said outlet line at a point downstream of said bypass line, for disposing of reactor effluent..

12. The lab-scale reactor system according to claim 6, wherein said reaction chamber is formed by at least one hollow body of a heat-resistant material embedded in said body of thermal insulating material.

13. The lab-scale reactor system according to claim 6, wherein said reaction chamber is formed as a void in said body of thermal insulating material.

14. The lab-scale reactor system according to claim 6, wherein a flow path from said inlet to said reaction chamber undergoes a conical expansion.

15. The lab scale reactor unit according to claim 6, wherein at least one radiation heat shield is disposed within said reaction chamber.
